(19) Europäisches Patentamt
European Patent Office
Office européen des brevets

(11) **EP 4 481 885 A1**

(12) **EUROPEAN PATENT APPLICATION**
published in accordance with Art. 153(4) EPC

(43) Date of publication:
**25.12.2024 Bulletin 2024/52**

(21) Application number: **23807735.8**

(22) Date of filing: **27.01.2023**

(51) International Patent Classification (IPC):
**H01M 10/42** (2006.01)    **H01M 10/48** (2006.01)

(52) Cooperative Patent Classification (CPC):
**H01M 10/42; H01M 10/48;** Y02E 60/10

(86) International application number:
**PCT/KR2023/001312**

(87) International publication number:
**WO 2023/224210 (23.11.2023 Gazette 2023/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.05.2022 KR 20220061919**

(71) Applicant: **LG Energy Solution, Ltd.**
**Seoul 07335 (KR)**

(72) Inventor: **KIM, Dong Hyun**
**Daejeon 34122 (KR)**

(74) Representative: **Plasseraud IP**
**104 Rue de Richelieu**
**CS92104**
**75080 Paris Cedex 02 (FR)**

(54) **OVERHEATING DIAGNOSIS METHOD, AND OVERHEATING DIAGNOSIS APPARATUS AND BATTERY SYSTEM PROVIDING SAME**

(57)    An overheating diagnosis method and an overheating diagnosis apparatus are discussed. The overheating diagnosing apparatus includes a measuring unit configured to measure a temperature of an object; a storage unit configured to store a temperature value measured by the measuring unit, and a control unit configured to, at each diagnosis time point of diagnosing overheating of the object, extract a plurality of previous diagnosis time points corresponding to a predetermined number of samples based on the diagnosis time point, calculate a moving average value that is an average of the plurality of temperature values corresponding to a plurality of diagnosis time points, respectively, and compare the temperature value measured at each diagnosis time point with a reference value equal to or greater than the moving average value by a predetermined value, to diagnose the overheating of the battery.

【Figure 4】

**Description**

**[Technical Field]**

CROSS-REFERENCE TO RELATED APPLICATION

This application claims priority to and the benefit of Korean Patent Application No. 10-2022-0061919 filed in the Korean Intellectual Property Office on May 20, 2022, the entire contents of which are incorporated herein by reference.
The present invention relates to a method of diagnosing overheating of an object (for example, a battery), an overheating diagnosis apparatus and a battery system providing the method.

**[Background Art]**

Recently, as the demand for portable electronic products, such as notebooks, video cameras, and portable phones, has increased rapidly, and the development of electric vehicles, batteries for energy storage, robots, and satellites is in full swing, research on high-performance batteries capable of repeated charging and discharging is being actively conducted.
Currently commercialized secondary batteries include nickel cadmium batteries, nickel hydride batteries, nickel zinc batteries, lithium secondary batteries, and the like, and among them, the lithium secondary battery is in the spotlight for its advantages in that charge and discharge are free because a memory effect is little, a self-discharge rate is very low, and energy density is very high, compared to the nickel-based secondary battery.
On the other hand, the temperature of the battery is an important factor affecting the performance of the battery. In general, the battery can operate efficiently when the temperature of the battery is distributed at an appropriate temperature. For example, when the temperature of the battery is too high, the performance of the battery may be deteriorated or an accident, such as an explosion, may occur due to a decrease in the safety of a negative electrode crystal lattice of the battery. Therefore, it is necessary to accurately monitor the temperature of the battery.
In the related art, whether a battery is overheated is diagnosed by comparing a preset reference value with a measured temperature of the battery. The method in the related art has a problem in that it is difficult to take appropriate measures because the time interval between when the overheating event is diagnosed and when the battery explodes or the like occurs is too short. In addition, the method in the related art has a problem of erroneously diagnosing the temperature rise due to aging of the battery as an overheating event.

**[Disclosure]**

**[Technical Problem]**

The present invention relates to an overheating diagnosis method capable of promptly diagnosing abnormal heating behavior (hereinafter, overheating) of an object with high precision, an overheat diagnosis apparatus and a battery system providing the method.

**[Technical Solution]**

An overheating diagnosis apparatus according to one aspect of the present invention includes: a measuring unit configured to measure a temperature of an object; a storage unit configured to store a temperature value measured by the measuring unit; and a control unit configured to, at each diagnosis time point, extract a plurality of previous diagnosis time points corresponding to a predetermined number of samples based on the diagnosis time point, calculate a moving average value that is an average of the plurality of temperature values corresponding to a plurality of diagnosis time points, respectively, and compare a temperature value measured at each diagnosis time point with a reference value to diagnose the overheating of the object, wherein the reference value is equal to or greater than the moving average value by a predetermined value.
The control unit may calculate an average standard deviation value, which is an average of a plurality of standard deviations corresponding to the plurality of diagnosis time points, respectively, calculate a first error value by multiplying the average standard deviation value by a predetermined multiple, and calculate the reference value by adding the first error value to the moving average value.
When the average standard deviation value is less than a predetermined deviation reference value, the control unit may determine a predetermined correction value as a second error value and add the second error value to the moving average value to calculate the reference value.
When the measured temperature value exceeds the reference value, the control unit may diagnose that an overheating event has occurred in the object.

A battery system according to another aspect of the present invention includes: a battery including a plurality of battery cells; a measuring unit configured to measure a temperature of the battery; a storage unit configured to store a temperature value measured by the measuring unit, and a control unit configured to, at each diagnosis time point of diagnosing overheating of the battery, extract a plurality of previous diagnosis time points corresponding to a predetermined number of samples based on diagnosis time point, calculate a moving average value that is an average of the plurality of temperature values corresponding to a plurality of diagnosis time points, respectively, and compare a temperature value measured at each diagnosis time point with a reference value to diagnose the overheating of the battery, the reference value being equal to or greater than the moving average value by a predetermined value.

The control unit may calculate an average standard deviation value, which is an average of a plurality of standard deviations corresponding to the plurality of diagnosis time points, respectively, calculate a first error value by multiplying the average standard deviation value by a predetermined multiple, and calculate the reference value by adding the first error value to the moving average value.

When the average standard deviation value is less than a predetermined deviation reference value, the control unit may determine a predetermined correction value as a second error value and add the second error value to the moving average value to calculate the reference value.

When the measured temperature value exceeds the reference value, the control unit may diagnose that an overheating event has occurred in the battery.

An overheating diagnosis method according to still another aspect of the present invention includes: a temperature data collection operation of collecting a temperature value, which is a temperature measurement value of a battery, at a predetermined diagnosis time point for diagnosing overheating of the battery including a plurality of battery cells; a sample group determination operation of extracting a plurality of previous diagnosis time points corresponding to a number of samples based on the diagnosis time point; a reference value determination operation of calculating a moving average value, which is an average of a plurality of temperature values corresponding to a plurality of diagnosis time points, respectively, and a reference value equal to or greater than the moving average value by a predetermined value; and an overheat diagnosis operation of diagnosing the overheating of the battery by comparing the temperature value with the reference value.

The reference value determination operation may include calculating an average standard deviation value, which is an average of standard deviations corresponding to the plurality of diagnosis time points, respectively, calculating a first error value by multiplying the average standard deviation value by a predetermined multiple, and calculating the reference value by adding the first error value to the moving average value.

The reference value determination operation may include, when the average standard deviation value is less than a predetermined deviation reference value, determining a predetermined correction value as a second error value and adding the second error value to the moving average value to calculate the reference value.

The overheating diagnosis operation may include, when the measured temperature value exceeds the reference value, diagnosing that an overheating event has occurred in the battery.

**[Advantageous Effects]**

Unlike the related art of diagnosis using a fixed reference value, the present invention calculates a reference value reflecting the temperature trend of an object at each overheating diagnosis time point and compares the calculated reference value with a measured temperature to perform an overheating diagnosis, thereby quickly determining the occurrence of an overheating event.

The present invention calculates a reference value reflecting the temperature trend of an object at each overheating diagnosis time point and compares the calculated reference value with the measured temperature to perform overheating diagnosis, so that it is possible to prevent a problem of erroneously diagnosing a rise in temperature due to aging of an object (for example, a battery) as the occurrence of an overheating event.

**[Description of the Drawings]**

FIG. 1 is a block diagram illustrating an overheating diagnosis apparatus according to an exemplary embodiment.
FIG. 2 is a block diagram illustrating a battery system according to another exemplary embodiment.
FIG. 3 is a flowchart illustrating an overheating diagnosis method according to an exemplary embodiment.
FIG. 4 is a flowchart illustrating a reference value determining operation S300 of FIG. 3 in detail.
FIG. 5 is an exemplary diagram illustrating a temperature change of a non-defective battery in a charging mode.
FIG. 6 is an exemplary diagram illustrating an overheating diagnosis for a defective battery in a charging mode.

**[Mode for Invention]**

Hereinafter, an exemplary embodiment disclosed the present specification will be described in detail with reference to the accompanying drawings, and the same or similar constituent element is denoted by the same reference numeral regardless of a reference numeral, and a repeated description thereof will be omitted. Suffixes, "module" and and/or "unit" for a constituent element used for the description below are given or mixed in consideration of only easiness of the writing of the specification, and the suffix itself does not have a discriminated meaning or role. Further, in describing the exemplary embodiment disclosed in the present disclosure, when it is determined that detailed description relating to well-known functions or configurations may make the subject matter of the exemplary embodiment disclosed in the present disclosure unnecessarily ambiguous, the detailed description will be omitted. Further, the accompanying drawings are provided for helping to easily understand exemplary embodiments disclosed in the present specification, and the technical spirit disclosed in the present specification is not limited by the accompanying drawings, and it will be appreciated that the present invention includes all of the modifications, equivalent matters, and substitutes included in the spirit and the technical scope of the present invention.

Terms including an ordinary number, such as first and second, are used for describing various constituent elements, but the constituent elements are not limited by the terms. The terms are used only to discriminate one constituent element from another constituent element.

It should be understood that when one constituent element is referred to as being "coupled to" or "connected to" another constituent element, one constituent element can be directly coupled to or connected to the other constituent element, but intervening elements may also be present. By contrast, when one constituent element is referred to as being "directly coupled to" or "directly connected to" another constituent element, it should be understood that there are no intervening elements.

In the present application, it will be appreciated that terms "including" and "having" are intended to designate the existence of characteristics, numbers, operations, operations, constituent elements, and components described in the specification or a combination thereof, and do not exclude a possibility of the existence or addition of one or more other characteristics, numbers, operations, operations, constituent elements, and components, or a combination thereof in advance.

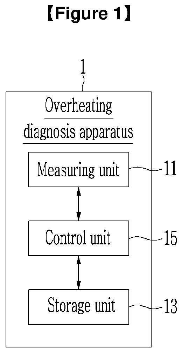

FIG. 1 is a block diagram illustrating an overheating diagnosis apparatus according to an exemplary embodiment.

Referring to FIG. 1, an overheating diagnosis apparatus 1 includes a measuring unit 11, a storage unit 13, and a control unit 150.

The measuring unit 11 may measure a temperature of an object at each diagnosis time point (hereinafter referred to as a diagnosis time point) for diagnosing overheating of the object, and transmit the measurement result to the control unit 15. For example, the measuring unit 11 may include a temperature sensor that measures the temperature of an object. In this case, the object may include, but is not limited to, a battery, and may include various devices that need to be predicted in advance before an overheating event occurs.

The storage unit 13 may store a temperature value of the object measured by the measuring unit 11 at each diagnosis time point. In addition, the storage unit 13 may store a moving average (MA) value, a standard deviation (SD), an average standard deviation (SD_ave), and a reference value (Th) calculated by the control unit 15 at each diagnosis time point. For example, the storage unit 13 may store the temperature value, moving average (MA) value, standard deviation (SD), average standard deviation (SD_ave), and reference value (Th) of the object corresponding to a predetermined diagnosis time point in the form of a lookup table.

The control unit 15 calculates a moving average value MA and a reference value Th greater than the moving average value by a predetermined value when a diagnosis time point according to a preset condition arrives. For example, when the object is a battery, the diagnosis time point may be a time point when charging of the battery starts or a time point when discharging of the battery ends. However, the present invention is not limited thereto, and the diagnosis time point may be variously set.

First, the control unit 15 may extract a plurality of diagnosis time points included in the preset number of samples SN when counting the diagnosis time points in the direction of the previous diagnosis time point based on the current diagnosis time point N, and determine a sample group. In this case, the number of samples SN is the number of a plurality of diagnosis time points included in the sample group, and may be determined as an optimal number based on an experiment or the like.

The sample group is a subgroup of a plurality of past diagnosis time points, which is a population, and may be a group for calculating a moving average MA and a average standard deviation value $\sigma\_ave$, which will be described below.

(Table 1)

| Diagnosis period | 1 | ⋯ | N-5 | N-4 | N-3 | N-2 | N-1 | N |
|---|---|---|---|---|---|---|---|---|
| Temperatur e (T) | - | ⋯ | 29.4 | 29.3 | 29.4 | 29.3 | 29.5 | $T_N$ |
| Moving average (MA) | - | ⋯ | 29.37 | 29.36 | 29.35 | 29.37 | 29.36 | $MA_N$ |
| Standard deviation (SD) | - | ⋯ | 0.0745 | 0.0744 | 0.0743 | 0.0744 | 0.0745 | $SD_N$ |
| Average standard deviation (SD_ave) | - | ⋯ | 0.0740 | 0.0741 | 0.0740 | 0.0742 | 0.0742 | $SD_{N\text{-}ave}$ |
| Reference value (Th) | - | ⋯ | 29.6 | 29.61 | 29.61 | 29.702 | 29.7 | $Th_N$ |
| Diagnosis result | - | - | Normal | Normal | Normal | Normal | Normal | - |

Table 1 is one example of the look-up tables for the object temperature T, moving average MA, standard deviation SD, average standard deviation SD_ave, and reference value Th corresponding to each of a plurality of diagnosis time points. Hereinafter, a method of calculating the reference value $Th_N$ necessary for overheating diagnosis at the $N^{th}$ diagnosis time point will be described in detail. Also, the number of samples SN is assumed to be 5.

For reference, since at an initial diagnosis time point 1 in Table 1, there is no previous diagnosis time point to form the sample group, it may be difficult to directly calculate the moving average MA, standard deviation SD, average standard deviation SD_ave, and reference value Th (therefore, the corresponding values in Table 1 are marked with blanks). In addition, since at predetermined diagnosis time points (for example, 2, 3, 4, and 5) adjacent to the first diagnosis time point 1, the number of a plurality of previous diagnosis time points to form the sample group is insufficient, it may be difficult to calculate the moving average MA, standard deviation SD, average standard deviation SD_ave, and reference value Th. In this case, the designer may provide the values averaged according to the experiment as the moving average MA, standard deviation SD, standard deviation SD_ave, and reference value Th at the initial diagnosis time point and the adjacent diagnosis time points (for example, 1, 2, 3, 4, and 5).

The control unit 15 may extract an $N$-1$^{th}$ diagnosis time point, an $N$-2$^{th}$ diagnosis time point, an $N$-3$^{th}$ diagnosis time point, an $N$-4$^{th}$ diagnosis time point, and an $N$-5$^{th}$ diagnosis time point corresponding to 5, which is the number of samples SN when counting the diagnosis time points in the direction of the previous diagnosis time point based on the current diagnosis time point N, and determine a sample group.

The control unit 15 may determine a sample group by extracting the plurality of diagnosis time points N-1, N-2, N-3, N-4, and N-5, and determine a reference value used for defect diagnosis based on a temperature value measured at each of a plurality of diagnosis time points belonging to the sample group.

Then, for example, in the case where the object is a battery, when the battery is used for a considerable period of time, the internal resistance value increases due to aging, and the problem of misdiagnosing the temperature rise due to the increase in the internal resistance value as the occurrence of an overheating event may be prevented. In addition, it is possible to solve the problem of erroneously diagnosing a temporary temperature rise the occurrence of an overheating event.

Next, the control unit 15 determines a reference value $Th_N$ corresponding to the $N^{th}$ diagnosis time point based on the temperature value measured at each of the plurality of diagnosis time points N-1, N-2, N-3, N-4, and N-5 belonging to the sample group.

According to the embodiment, the control unit 15 compares the temperature value $T_N$ measured at the $N^{th}$ diagnosis time point with the reference value $Th_N$ to diagnose whether the object is overheated. For example, referring to Table 1, the moving average value $MA_N$ and the average standard deviation $SD_N\_ave$ are values required to calculate the reference value $Th_N$. However, the standard deviation $SD_N$ is not a value necessary for diagnosing the overheating state at the $N^{th}$ diagnosis time point, but is needed when the overheating state is diagnosed at the subsequent diagnosis time points N+1, N+2, ..., so that the standard deviation $SD_N$ may be calculated at the $N^{th}$ diagnosis time point and stored in the storage unit 13.

Hereinafter, with reference to Table 1, the moving average value $MA_N$, standard deviation $SD_N$, average standard deviation $SD_N\_ave$, and reference value $Th_N$ calculated by the control unit 15 at the $N^{th}$ diagnosis time pint will be described.

The control unit 15 may average (29.4°C+29.3°C+29.4°C+29.3°C+29.5°C/5 - 29.38°C) the plurality of temperature values (29.4°C, 29.3°C, 29.4°C, 29.3°C, 29.5°C) corresponding to the plurality of diagnosis time points (N-5, N-4, N-3, N-2, and N-1), respectively, belonging to the sample group and calculate the moving average value $MA_N$ (29.38°C) corresponding to the diagnosis time point N. That is, when it is assumed that the number of samples SN is 5, the moving average value $MA_N$ at the $N^{th}$ diagnosis time point may be calculated by Equation (1) below.

$$MA_N = \frac{T_{N-5} + T_{N-4} + T_{N-3} + T_{N-2} + T_{N-1}}{5}$$ - Equation (1)

Referring to Table 2 below, the control unit 15 may calculate a standard deviation $SD_N$ corresponding to the $N^{th}$ diagnosis time point based on the temperature values T and the moving average values MAN corresponding to the plurality of diagnosis time points N-5, N-4, N-3, N-2, and N-1, respectively, belonging to the sample group calculated by using above Equation (1).

(Table 2)

| | N-5 | N-4 | N-3 | N-2 | N-1 | N |
|---|---|---|---|---|---|---|
| Temperature (T) | 29.4 | 29.3 | 29.4 | 29.3 | 29.5 | |
| $|T-MA_n|$ | $|29.4 - 29.38|$ | $|29.3 - 29.38|$ | $|29.4 - 29.38|$ | $|29.3 - 29.38|$ | $|29.5 - 29.38|$ | |
| $(T-MA_n)2$ | $(0.02)^2 = 0.0004$ | $(0.08)^2 = 0.0064$ | $(0.02)^2 = 0.0004$ | $(0.08)^2 = 0.0064$ | $(0.12)^2 = 0.0144$ | |
| Dispersion | (0.0004+ 0.0064+ 0.0004+ 0.0064+ 0.0144)/5=0.0056 | | | | | |
| Standard deviation $(SD_N)$ | $\sqrt{0.0056}$ = 0.0748331477(≒0.0748) | | | | | 0.0748 |

As described above, the standard deviation $SD_N$ corresponding to the $N^{th}$ diagnosis time point is not a value necessary for diagnosing an overheating state at the $N^{th}$ diagnosis time point, but is required for diagnosing whether the object is overheated at the next diagnosis time point N+1, N+2, and.... Accordingly, the standard deviation $SD_N$ corresponding to the $N^{th}$ diagnosis time point may be calculated at the $N^{th}$ diagnosis time point and stored in the storage unit 13.

(Table 3)

| | N-5 | N-4 | N-3 | N-2 | N-1 | N |
|---|---|---|---|---|---|---|
| Standard deviation (SD) | 0.0740 | 0.0742 | 0.0740 | 0.0742 | 0.0746 | |
| Average standard deviaton $(SD_{N\_ave})$ | (0.0740+ 0.0742+ 0.0740+ 0.0742+ 0.0746)/5=0.0742 | | | | | 0.0742 |

Referring to Table 3, the control unit 15 may calculate a average standard deviation value $SD_{N}$_ave (0.0742) corresponding to the $N^{th}$ diagnosis time point based on a plurality of standard deviations $SD_{N-5}$, $SD_{N-4}$, $SD_{N-3}$, $SD_{N-2}$, and $SD_{N-1}$ corresponding to the plurality of diagnosis time points N-5, N-4, N-3, N-2, and N-1, respectively, belonging to the sample group.

The control unit 15 may calculate a reference value Th having a predetermined value greater than the moving average value $MA_N$. According to the embodiment, the control unit 15 may calculate an error value ER obtained by multiplying the average standard deviation value SD_ave by a predetermined multiple Q, and calculate the reference value Th by adding the error value ER to the moving average value MA. In this case, the multiple Q is a value for setting a criterion for whether an overheating event occurs, and may be determined by various values through experiments. Hereinafter, it is assumed that the multiple Q is the natural number 3.

Temperature deviations of ±0.5°C may occur according to a temperature sensor mounted on an overheating diagnosis apparatus to measure the temperature of an object, and the type of Analog-Digital Converter (ADC) that converts the measured analog temperature value into a digital temperature value, and the like. For precise overheating diagnosis of an object, it is necessary to compensate for a temperature deviation that may occur by a temperature sensor.

According to the embodiment, when the average standard deviation value SD_ave is equal to or greater than the predetermined deviation reference value $Th_{\_DV}$, the control unit 15 may calculate the error value ER by multiplying the average standard deviation value $SD_{\_ave}$ by a predetermined multiple. In this case, the deviation reference value $Th_{\_DV}$

may be a reference value for reflecting an error that may occur in a temperature measurement process. For example, the deviation reference value $Th_{\_DV}$ may be set to 0.5°C, but is not limited thereto, and may be determined to various values according to experiments.

When the average standard deviation value SD_ave is equal to or greater than the predetermined deviation reference value $Th_{\_DV}$, the control unit 15 may calculate the error value ER using Equation (2) below.

$$ER = SD_{\_ave} \times Q \quad \text{- Equation (2)}$$

According to another embodiment, when the average standard deviation value SD_ave is less than the predetermined deviation reference value $Th_{\_DV}$, the control unit 15 may determine the predetermined correction value CB as the error value ER. In this case, the correction value CB may be a value for correcting an error that may occur in a temperature measurement process. For example, the correction value CB may be set to 0.5° C., but is not limited thereto, and may be determined to various values according to experiments.

$$ER = CB \quad \text{-Equation (3)}$$

$$ER = CB$$

For example, referring to Table 3, the average standard deviation value $SD_{N\_ave}$ corresponding to the $N^{th}$ diagnosis time point may be calculated as 0.0742. That is, since the average standard deviation value $SD_{N\_ave}$ (0.0742) corresponding to the $N^{th}$ diagnosis time point is less than the predetermined deviation reference value $Th_{\_DV}$ (0.5) (0.0742 < 0.5), the control unit 15 may determine the predetermined correction value CB (0.5) as the error value ER.

The control unit 15 may calculate the reference value Th by adding the error value ER to the moving average value MA. For example, when the average standard deviation value SD_ave is equal to or greater than the predetermined deviation reference value $Th_{\_DV}$, the control unit 15 may calculate the error value ER by multiplying the average standard deviation value SD_ave by a predetermined multiple, and calculate the reference value Th by adding the error value ER to the moving average value MA. For another example, when the average standard deviation value SD_ave is less than the predetermined deviation reference value $Th_{\_DV}$, the control unit 15 may determine the correction value CB as the error value ER and calculate the reference value Th by adding the error value ER to the moving average value MA. The control unit 15 may calculate the reference value Th by using Equation (4) below.

$$Th = MA + ER \quad \text{-Equation (4)}$$

For example, referring to Table 3 above, since the average standard deviation value $SD_{N\_ave}$ (0.0742) corresponding to the $N^{th}$ diagnosis time point is smaller than the deviation reference value $Th_{\_DV}$ (0.5), the control unit 15 may determine a predetermined correction value CB (0.5) as an error value ER. The control unit 15 may calculate the reference value Th by adding the error value ER (0.5°C) to the moving average value MA (29.38). That is, the reference value Th may be 29.88°C (29.38°C + 0.5°C).

The control unit 15 may compare the temperature $T_N$ value measured at the $N^{th}$ diagnosis time point with the reference value $Th_N$ calculated at the $N^{th}$ diagnosis time point to diagnose whether an overheating event has occurred in the object.

For example, referring to Table 1, it is assumed that the temperature $T_N$ value measured at the $N^{th}$ diagnosis time point is 30°C. Since the value of temperature $T_N$ (30°C) corresponding to the $N^{th}$ diagnosis time point exceeds the reference value $Th_N$ (29.88°C) corresponding to the $N^{th}$ diagnosis time point, the control unit 35 may diagnose that an overheating event has occurred.

(Table 4)

| Diagnosis period | 1 | ⋯ | N-5 | N-4 | N-3 | N-2 | N-1 | N | N+1 |
|---|---|---|---|---|---|---|---|---|---|
| Temperat ure (T) | - | | 29.4 | 29.3 | 29.4 | 29.3 | 29.5 | 30 | TN+1 |
| Moving average (MA) | - | | 29.37 | 29.36 | 29.35 | 29.37 | 29.36 | 29.38 | $MA_{N+1}$ |

(continued)

| Diagnosis period | 1 | ... | N-5 | N-4 | N-3 | N-2 | N-1 | N | N+1 |
|---|---|---|---|---|---|---|---|---|---|
| Standard deviation (SD) | - | | 0.0745 | 0.0744 | 0.0743 | 0.0744 | 0.0745 | 0.0748 | $SD_{N+1}$ |
| Average standard deviation (SD_ave) | - | | 0.0740 | 0.0741 | 0.0740 | 0.0742 | 0.0742 | 0.0742 | $SD_{N+1\_ave}$ |
| Reference value (Th) | - | | 29.6 | 29.61 | 29.61 | 29.702 | 29.7 | 29.88 | $Th_{N+1}$ |
| Diagnosis result | - | | Normal | Normal | Normal | Normal | Normal | Overheating | - |

Table 4 is another example of a lookup table for the temperature T, moving average MA, standard deviation SD, average standard deviation (SD_ave), and reference value Th of the object corresponding to each of a plurality of diagnosis time points.

Referring to Table 4, when the control unit 15 may extract an $N^{th}$ diagnosis time point, an $N-1^{th}$ diagnosis time point, an $N-2^{th}$ diagnosis time point, an $N-3^{th}$ diagnosis time point, and an $N-4^{th}$ diagnosis time point corresponding to the number of samples SN of 5 when counting the diagnosis time point in the direction of the previous diagnosis time point based on the current diagnosis time point N+1, and determine the sample group.

The control unit 15 may determine a sample group by extracting a plurality of diagnosis time points N, N-1, N-2, N-3, and N-4, and determine a reference value used for defect diagnosis based on the temperature value measured at each of the plurality of diagnosis time points belonging to the sample group.

The control unit 15 may calculate the moving average $MA_{N+1}$, standard deviation $SD_{N+1}$, average standard deviation $SD_{N+1\_ave}$, and reference value $Th_{N+1}$ corresponding to the $N+1^{th}$ diagnosis time point by using Tables 1 to 3 and Equations (1) to (4) described above.

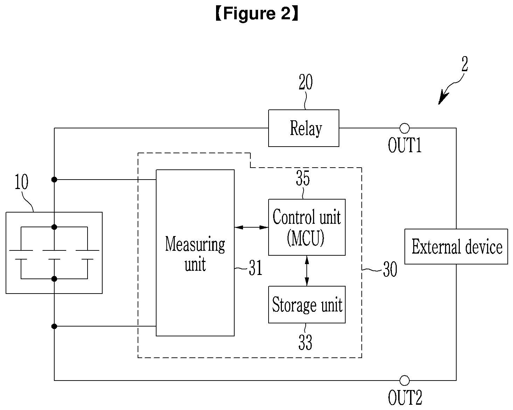

FIG. 2 is a block diagram illustrating a battery system according to another exemplary embodiment.

Referring to FIG. 2, a battery system 2 includes a battery 10, a relay 20, and a battery management system (BMS) 30.

The battery 10 may include a plurality of battery cells connected in series and/or in parallel. In FIG. 2, three battery cells connected in parallel are illustrated, but the present invention is not limited thereto, and the battery 10 may include various numbers of battery cells connected in series and/or in parallel. In some exemplary embodiments, the battery cell may be a rechargeable secondary battery. Further,

For example, in the battery 10, a predetermined number of battery cells is connected in parallel to form a battery bank, and a predetermined number of battery banks is connected in series to form a battery pack to supply desired power to an external device. For another example, in the battery 10, a predetermined number of battery cells is connected in parallel to form a battery bank, and a predetermined number of battery banks is connected in parallel to form a battery pack to supply desired power to an external device. However, the present invention is not limited to this connection, and the battery 10 may include a plurality of battery banks including a plurality of battery cells connected in series and/or parallel, and the plurality of battery banks may also be connected in series and/or parallel.

In FIG. 2, the battery 10 is connected between two output terminals OUT1 and OUT2 of the battery system 2. In addition, the relay 20 is connected between the positive electrode and the first output terminal OUT1 of the battery system 2. The configurations illustrated in FIG. 2 and the connection relationship between the configurations are examples, but the invention is not limited thereto.

The relay 20 controls electrical connection between the battery system 2 and an external device. When the relay 20 is turned on, the battery system 2 and the external device are electrically connected to perform charging or discharging, and when the relay 20 is turned off, the battery system 2 and the external device are electrically separated. In this case, the external device may be a charger in a charging cycle in which power is supplied to the battery 10 for charging, and may be a load in a discharging cycle in which the battery 10 discharges power to the external device.

The BMS 30 includes a measuring unit 31, a storage unit 33, and a control unit 35. The overheating diagnosis apparatus 1 illustrated in FIG. 1 may correspond to the BMS 30 illustrated in FIG. 2. Specifically, the functions performed by the measuring unit 11, the storage unit 13, and the control unit 15 of the overheating diagnosis apparatus 1 may correspond to the functions performed by the measuring unit 31, the storage unit 33, and the control unit 35 of the BMS 30. For example, the overheating diagnosis apparatus 1 may be configured separately from the battery system 2. For another example, in the battery system 2 as illustrated in FIG. 2, the BMS 30 may perform the function of the overheating diagnosis apparatus 1.

Hereinafter, descriptions of the respective functions of the measuring unit 31, the storage unit 33, and the control unit 35 of the BMS 30 will be replaced with the descriptions of the measuring unit 11, the storage unit 13, and the control unit 15 of the overheat diagnosis apparatus 1.

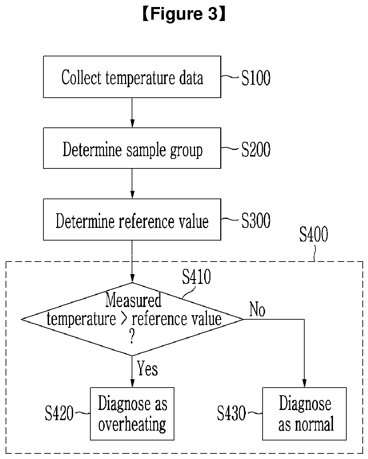

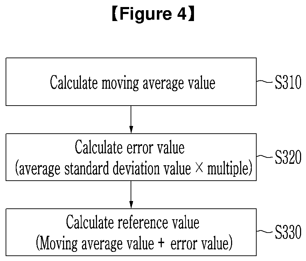

FIG. 3 is a flowchart illustrating an overheating diagnosis method according to an exemplary embodiment, and FIG. 4 is a flowchart illustrating a reference value determining operation S300 of FIG. 3 in detail.

Hereinafter, an overheating diagnosis method, the overheating diagnosis apparatus 1 and the battery system 2 for providing the overheating diagnosis method will be described with reference to FIGS. 1 to 4. Hereinafter, the overheating diagnosis method, the overheating diagnosis apparatus 1 and the battery system 2 for providing the overheating diagnosis method will be described based on the measuring unit 31, the storage unit 33, and the control unit 35 of the BMS 30 are described, but they may also be equally applied to the measuring unit 11, the storage unit 13, and the control unit 15 of the overheating diagnosis apparatus 1. In addition, although the present invention is described based on the battery 10, the present invention is not limited thereto, and may be equally applied to various objects requiring temperature measurement.

First, the control unit 35 collects the measurement value of the temperature of the battery 10 from the measuring unit 31 at a predetermined diagnosis time point for diagnosing overheating of the battery 10 (S100).

When a diagnosis time point according to a preset condition arrives, the measuring unit 31 may measure the temperature of the battery 10 and transmit the measurement result to the control unit 35. For example, the measuring unit 31 may include a temperature sensor to measure the temperature of the battery 10 at each diagnosis time point, and transmit the measurement result to the control unit 35. For another example, the measuring unit 31 may receive a temperature value measured by the temperature sensor at a predetermined time interval or in real time, extract temperature data corresponding to a predetermined diagnosis time point, and transmit the extracted temperature data to the control unit 35.

Next, the control unit 35 determines a sample group by extracting a plurality of previous diagnosis time points corresponding to the number of samples SN based on the current diagnosis time point N (S200).

Table

Referring to Table 1, the control unit 35 may extract an N-1$^{th}$ diagnosis time point, an N-2$^{th}$ diagnosis time point, an N-3$^{th}$ diagnosis time point, an N-4$^{th}$ diagnosis time point, and an N-5$^{th}$ diagnosis time point corresponding to 5, which is the number of samples SN when counting the diagnosis time points in the direction of the previous diagnosis time point based on the current diagnosis time point N, and determine a sample group.

The control unit 35 may determine a sample group by extracting the plurality of diagnosis time points N-1, N-2, N-3, N-4, and N-5, and determine a reference value $TH_N$ used for defect diagnosis based on a temperature value measured at each of a plurality of diagnosis time points belonging to the sample group. When the reference value $Th_N$ is set by a method to be described below, it is possible to prevent a problem of erroneously diagnosing an increase in temperature due to aging of the battery as an occurrence of an overheating event. In addition, it is possible to solve the problem of erroneously diagnosing a temporary temperature rise as occurrence of an overheating event.

Next, the control unit 35 determines the reference value $Th_N$ corresponding to the N$^{th}$ diagnosis time point based on the temperature value measured at each of the plurality of diagnosis time points N-1, N-2, N-3, N-4, and N-5 belonging to the sample group (S300).

In operation S300, referring to FIG. 4, the control unit 35 calculates a moving average value $MA_N$ corresponding to the N$^{th}$ diagnosis time point by averaging a plurality of temperature values corresponding to a plurality of diagnosis time points, respectively, belonging to the sample group (S310).

In particular, referring to Table 1, the control unit 35 may average (29.4°C+29.3°C+29.4°C+29.3°C+29.5°C/5 - 29.38°C) the plurality of temperature values (29.4°C, 29.3°C, 29.4°C, 29.3°C, 29.5°C) corresponding to the plurality of diagnosis time points (N-5, N-4, N-3, N-2, and N-1), respectively, belonging to the sample group and calculate the moving average value $MA_N$ (29.38°C) corresponding to the N$^{th}$ diagnosis time point. That is, when it is assumed that the number of samples SN is 5, the moving average value $MA_N$ at the N$^{th}$ diagnosis time point may be calculated by Equation (1) above.

In operation S300, the control unit 35 calculates an average standard deviation value $SD_{N\_}$ave by averaging a plurality of standard deviations corresponding to the plurality of diagnosis time points, respectively, belonging to the sample group, and calculates an error value based on the average standard deviation value $SD_{N\_}$ave (S320).

In particular, referring to Table 3, the control unit 35 may calculate a average standard deviation value $SD_N\_$ave (0.0742) corresponding to the N$^{th}$ diagnosis time point based on a plurality of standard deviations $SD_{N-5}$, $SD_{N-4}$, $\overline{SD}_{N-3}$, $SD_{N-2}$, and $SD_{N-1}$ corresponding to the plurality of diagnosis time points N-5, N-4, N-3, N-2, and N-1, respectively, belonging to the sample group.

Temperature deviations of $\pm 0.5$°C may occur according to a temperature sensor mounted on an overheating diagnosis apparatus to measure the temperature of an object, and the type of Analog-Digital Converter (ADC) that converts the measured analog temperature value into a digital temperature value, and the like. For precise overheating diagnosis of an object, it is necessary to compensate for a temperature deviation that may occur by a temperature sensor.

According to the embodiment, when the average standard deviation value $SD_{\_}$ave is equal to or greater than the predetermined deviation reference value $Th_{DV}$, the control unit 35 may calculate the error value ER by multiplying the average standard deviation value $SD_{ave}$ by a predetermined multiple Q. In this case, the deviation reference value $Th_{DV}$ may be a reference value for reflecting an error that may occur in a temperature measurement process. For example, the deviation reference value $Th_{DV}$ may be set to 0.5, but is not limited thereto, and may be determined to various values according to experiments. Specifically, the control unit 35 may calculate the error value ER by using Equation (2).

According to another embodiment, when the average standard deviation value SD_ave is less than the predetermined deviation reference value $Th_{DV}$, the control unit 35 may determine a predetermined correction value CB as the error value ER. In this case, the correction value CB may be a value for correcting an error that may occur in a temperature measurement process. For example, the correction value CB may be set to 0.5°C., but is not limited thereto, and may be determined to various values according to experiments. Specifically, the control unit 35 may calculate the error value ER by using Equation (3).

For example, referring to Table 3, the control unit 35 may calculate the average standard deviation value $SD_{N}$_ave corresponding to the $N^{th}$ diagnosis time point as 0.0742. In this case, since the average standard deviation value $SD_{N}$_ave (0.0742) corresponding to the $N^{th}$ diagnosis time point is less than the predetermined deviation reference value $Th_{DV}$ (0.5), the control unit 35 may determine the predetermined correction value CB (0.5) as the error value ER (0.5).

In operation S300, the control unit 35 may calculate the reference value Th by adding the error value ER to the moving average value MA (S330).

For example, when the average standard deviation value SD_ave is equal to or greater than the predetermined deviation reference value $Th_{DV}$, the control unit 35 may calculate the error value ER by multiplying the average standard deviation value SD_ave by a predetermined multiple, and calculate the reference value Th by adding the error value ER to the moving average value MA. For another example, when the average standard deviation value SD_ave is less than the predetermined deviation reference value $Th_{DV}$, the control unit 35 may determine the correction value CB as the error value ER and calculate the reference value Th by adding the error value ER to the moving average value MA. The control unit 35 may calculate the reference value Th by using Equation (4).

For example, referring to Table 3 above, since the average standard deviation value SDN_ave (0.0742) corresponding to the $N^{th}$ diagnosis time point is smaller than the deviation reference value $Th_{DV}$ (0.5), the control unit 35 may determine a predetermined correction value CB (0.5) as an error value ER. The control unit 35 may calculate the reference value Th by adding the error value ER (0.5°C) to the moving average value MA (29.38). That is, the reference value Th may be 29.88°C (29.38°C + 0.5°C).

Next, the control unit 35 may compare the temperature $T_N$ value measured at the $N^{th}$ diagnosis time point with the reference value $Th_N$ calculated at the $N^{th}$ diagnosis time point to diagnose whether an overheating event has occurred in the battery 10 (S400).

In operation S400, referring to FIG. 3, the control unit 35 determines whether the temperature $T_N$ value corresponding to the $N^{th}$ diagnosis time point exceeds the reference value $Th_N$ (S410).

When the temperature $T_N$ value corresponding to the $N^{th}$ diagnosis time point exceeds the reference value $Th_N$ as a result of the determination (S410, YES), the control unit 35 diagnoses that an overheating event has occurred in the battery 10 (S420).

For example, referring to Table 1, it is assumed that the temperature $T_N$ value measured at the $N^{th}$ diagnosis time point is 30°C. Since the value of temperature $T_N$ (30°C) corresponding to the $N^{th}$ diagnosis time point exceeds the reference value $Th_N$ (29.88°C) corresponding to the $N^{th}$ diagnosis time point, the control unit 35 may diagnose that an overheating event has occurred.

When the temperature $T_N$ value corresponding to the $N^{th}$ diagnosis time point does not exceed the reference value $Th_N$ as the result of the determination (S410, NO), the control unit 35 diagnoses the temperature of the battery 10 as normal (S430).

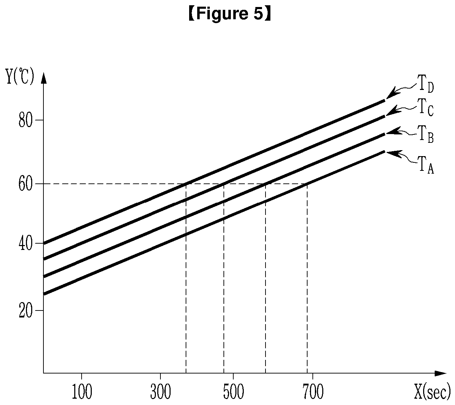

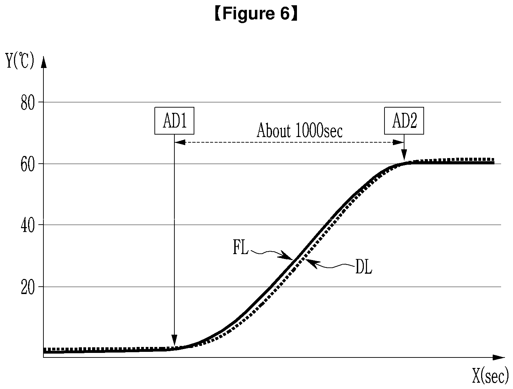

FIG. 5 is an exemplary diagram illustrating a temperature change of a non-defective battery in a charging mode, and FIG. 6 is an exemplary diagram illustrating an overheating diagnosis for a defective battery in a charging mode.

In FIGS. 5 and 6, the X-axis represents time (sec), and the Y-axis represents temperature (°C).

Referring to FIG. 5, FIG. 5 is an exemplary diagram illustrating temperature change with respect to time change when a non-defective battery is charged at various external temperatures.

For example, when the ambient temperature is 25°C, in a charging mode in which the battery 10 is charged with power from an external device, the change in temperature of the battery 10 over time may correspond to a first graph $T_A$. For another example, when the ambient temperature is 30°C, when the battery 10 is charged, the change in temperature of the battery 10 over time may correspond to a second graph $T_B$. Equally, the temperature changes of the battery 10 when the ambient temperature is 35°C and when the ambient temperature is 40°C may correspond to a third graph Tc and a fourth graph $T_D$, respectively.

That is, in the case of the battery 10 in a normal state according to a predetermined criterion or a new unused battery 10, when the external temperature changes, the starting temperature value may be different, but as illustrated in FIG. 5, the temperature change (that is, a slope) according to a change in time may be constant.

Referring to FIG. 6, FIG. 6 is an exemplary diagram illustrating a temperature change with respect to time change when a defective battery is charged at a predetermined external temperature, and is a graph derived by an experiment.

At this time, the solid line FL is the actually measured temperature of the battery, and the dotted line DL drawn close to the solid line FL is the reference line. The reference line may be configured by connecting reference values calculated at each diagnosis time point according to the embodiment. Referring to FIGS. 5 and 6, the temperature change of the non-defective battery forms a straight line graph as illustrated in FIG. 5, but the temperature change of the defective battery may form a curve graph as illustrated in FIG. 6.

In the related art, when the temperature of the battery 10 exceeds a fixed reference value (for example, 60°C), the occurrence of an overheating event is diagnosed at that time point. Referring to FIG. 6, in the related art, overheating of the battery 10 may be diagnosed for the first time at the second time point AD2.

However, according to the overheating diagnosis method according to the embodiment, the occurrence of an overheating event may be diagnosed in advance before the temperature of the battery 10 exceeds a fixed reference value (for example, 60°C). As a result of the experiment, overheating of the battery 10 was diagnosed for the first time at the first time point AD1. Specifically, as a result of the diagnosis, the overheating event was continuously diagnosed at each diagnosis time point from the first time point AD1 when the solid line FL exceeded the dotted line DL to the second time point AD2.

Referring to FIG. 6, as a result of the experiment, a time difference of about 1000 secs (about 16 minutes) was illustrated between the first time point AD1 and the second time point AD2. According to the method for diagnosing overheating according to the embodiment, it is possible to recognize the occurrence of an overheating event of the battery 10 in advance, so that a countermeasure may be prepared.

While this invention has been described in connection with what is presently considered to be practical exemplary embodiments, it is to be understood that the invention is not limited to the disclosed exemplary embodiments.

**Claims**

1. An overheating diagnosis apparatus, comprising:

    a measuring unit configured to measure a temperature of an object;
    a storage unit configured to store a temperature value measured by the measuring unit; and
    a control unit configured to, at each diagnosis time point of diagnosing overheating of the object, extract a plurality of previous diagnosis time points corresponding to a predetermined number of samples based on the diagnosis time point, calculate a moving average value that is an average of the plurality of temperature values corresponding to a plurality of diagnosis time points, respectively, and compare a temperature value measured at each diagnosis time point with a reference value to diagnose the overheating of the object, the reference value being equal to or greater than the moving average value by a predetermined value.

2. The overheating diagnosis apparatus of claim 1, wherein the control unit is configured to:

    calculate an average standard deviation value, which is an average of a plurality of standard deviations corresponding to the plurality of diagnosis time points, respectively,
    calculate a first error value by multiplying the average standard deviation value by a predetermined multiple, and
    calculate the reference value by adding the first error value to the moving average value.

3. The overheating diagnosis apparatus of claim 2, wherein when the average standard deviation value is less than a predetermined deviation reference value, the control unit determines a predetermined correction value as a second error value and adds the second error value to the moving average value to calculate the reference value.

4. The overheating diagnosis apparatus of claim 1, wherein when the measured temperature value exceeds the reference value, the control unit diagnoses that an overheating event has occurred in the object.

5. A battery system, comprising;

    a battery including a plurality of battery cells;
    a measuring unit configured to measure a temperature of the battery;
    a storage unit configured to store a temperature value measured by the measuring unit, and
    a control unit configured to, at each diagnosis time point of diagnosing overheating of the battery, extract a plurality of previous diagnosis time points corresponding to a predetermined number of samples based on the diagnosis time point, calculate a moving average value that is an average of the plurality of temperature values corresponding to a plurality of diagnosis time points, respectively, and compare a temperature value measured at each diagnosis time point with a reference value to diagnose the overheating of the battery, the reference value being equal to or greater than the moving average value by a predetermined value.

6. The battery system of claim 5, wherein the control unit is configured to:

calculate an average standard deviation value, which is an average of a plurality of standard deviations corresponding to the plurality of diagnosis time points, respectively,
calculate a first error value by multiplying the average standard deviation value by a predetermined multiple, and calculate the reference value by adding the first error value to the moving average value.

7. The battery system of claim 6, wherein when the average standard deviation value is less than a predetermined deviation reference value, the control unit determines a predetermined correction value as a second error value and adds the second error value to the moving average value to calculate the reference value.

8. The battery system of claim 5, wherein when the measured temperature value exceeds the reference value, the control unit diagnoses that an overheating event has occurred in the battery.

9. An overheating diagnosis method, comprising:

a temperature data collection operation of collecting a temperature value, which is a temperature measurement value of a battery, at a predetermined diagnosis time point for diagnosing overheating of the battery including a plurality of battery cells;
a sample group determination operation of extracting a plurality of previous diagnosis time points corresponding to a number of samples based on the diagnosis time point;
a reference value determination operation of calculating a moving average value, which is an average of a plurality of temperature values corresponding to a plurality of diagnosis time points, respectively, and a reference value equal to or greater than the moving average value by a predetermined value; and
an overheat diagnosis operation of diagnosing the overheating of the battery by comparing the temperature value with the reference value.

10. The overheating diagnosis method of claim 9, wherein the reference value determination operation includes:

calculating an average standard deviation value, which is an average of standard deviations corresponding to the plurality of diagnosis time points, respectively,
calculating a first error value by multiplying the average standard deviation value by a predetermined multiple, and calculating the reference value by adding the first error value to the moving average value.

11. The overheating diagnosis method of claim 10, wherein the reference value determination operation includes, when the average standard deviation value is less than a predetermined deviation reference value, determining a predetermined correction value as a second error value and adding the second error value to the moving average value to calculate the reference value.

12. The overheating diagnosis method of claim 9, wherein the overheating diagnosis operation includes, when the measured temperature value exceeds the reference value, diagnosing that an overheating event has occurred in the battery.

【Figure 1】

Overheating
diagnosis apparatus

Measuring unit —11

Control unit —15

Storage unit —13

【Figure 2】

【Figure 3】

```
┌─────────────────────────┐
│ Collect temperature data │──S100
└─────────────────────────┘
            │
            ▼
┌─────────────────────────┐
│  Determine sample group  │──S200
└─────────────────────────┘
            │
            ▼
┌─────────────────────────┐
│ Determine reference value│──S300
└─────────────────────────┘
            │                        S400
            │
┌ ─ ─ ─ ─ ─ ┼ ─ ─ ─ ─ ─ ─ ─ ─ ─ ─ ─ ─ ─ ─ ─ ┐
            ▼              S410
│        ◇─────────────────◇                  │
      ◇   Measured              ◇      No
│  ◇ temperature > reference value ◇──────────│──┐
      ◇           ?             ◇               │
│        ◇─────────────────◇                  │  │
            │ Yes                               │  │
│           ▼                                  │  ▼
   S420─┌──────────┐          S430─┌──────────┐│
│       │Diagnose as│               │ Diagnose ││
        │overheating│               │as normal ││
│       └──────────┘               └──────────┘│
└ ─ ─ ─ ─ ─ ─ ─ ─ ─ ─ ─ ─ ─ ─ ─ ─ ─ ─ ─ ─ ─ ─ ┘
```

**【Figure 4】**

```
┌────────────────────────────────────────┐
│      Calculate moving average value     │ ~S310
└────────────────────────────────────────┘
                    │
                    ▼
┌────────────────────────────────────────┐
│           Calculate error value         │
│ (average standard deviation value × multiple) │ ~S320
└────────────────────────────────────────┘
                    │
                    ▼
┌────────────────────────────────────────┐
│          Calculate reference value      │
│     (Moving average value + error value)│ ~S330
└────────────────────────────────────────┘
```

【Figure 5】

【Figure 6】

## INTERNATIONAL SEARCH REPORT

| International application No. |
| --- |
| **PCT/KR2023/001312** |

**A. CLASSIFICATION OF SUBJECT MATTER**

**H01M 10/42**(2006.01)i; **H01M 10/48**(2006.01)i

According to International Patent Classification (IPC) or to both national classification and IPC

**B. FIELDS SEARCHED**

Minimum documentation searched (classification system followed by classification symbols)

H01M 10/42(2006.01); B60L 58/26(2019.01); F26B 17/14(2006.01); F26B 25/00(2006.01); G01R 31/382(2019.01); G01R 31/396(2019.01); G05B 19/418(2006.01); G05B 23/02(2006.01); H01M 10/48(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 온도 (temperature), 센서 (sensor), 이동 평균값 (moving average value), 비교 (compare), 제어 (control)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-208477 A (ISEKI & CO., LTD.) 03 August 2001 (2001-08-03) See abstract; claim 1; and paragraphs [0007] and [0025]-[0029]. | 1,4 |
| Y | | 2,3,5-12 |
| Y | JP 2013-167933 A (OMRON CORP.) 29 August 2013 (2013-08-29) See claim 12. | 2,3,6,7,10,11 |
| Y | KR 10-2021-0083460 A (SL CORPORATION) 07 July 2021 (2021-07-07) See claims 1 and 10; and paragraph [0003]. | 5-12 |
| A | KR 10-2020-0113951 A (HYUNDAI MOTOR COMPANY et al.) 07 October 2020 (2020-10-07) See entire document. | 1-12 |
| A | KR 10-2020-0143929 A (LG CHEM, LTD.) 28 December 2020 (2020-12-28) See entire document. | 1-12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 May 2023** | **01 May 2023** |

| Name and mailing address of the ISA/KR | Authorized officer |
| --- | --- |
| **Korean Intellectual Property Office** **Government Complex-Daejeon Building 4, 189 Cheongsaro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/001312**

| Patent document cited in search report | | | Publication date (day/month/year) | Patent family member(s) | | | Publication date (day/month/year) |
|---|---|---|---|---|---|---|---|
| JP | 2001-208477 | A | 03 August 2001 | JP | 4325053 | B2 | 02 September 2009 |
| JP | 2013-167933 | A | 29 August 2013 | CN | 103246212 | A | 14 August 2013 |
| | | | | EP | 2629161 | A2 | 21 August 2013 |
| | | | | EP | 2629161 | A3 | 22 October 2014 |
| | | | | JP | 5842654 | B2 | 13 January 2016 |
| | | | | KR | 10-2013-0093556 | A | 22 August 2013 |
| | | | | TW | 201339512 | A | 01 October 2013 |
| | | | | US | 2013-0211599 | A1 | 15 August 2013 |
| KR | 10-2021-0083460 | A | 07 July 2021 | None | | | |
| KR | 10-2020-0113951 | A | 07 October 2020 | None | | | |
| KR | 10-2020-0143929 | A | 28 December 2020 | None | | | |

Form PCT/ISA/210 (patent family annex) (July 2022)

**EP 4 481 885 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220061919